# EUROPÄISCHE PATENTSCHRIFT

(11) **EP 2 418 040 B1**
(45) Veröffentlichungstag und Bekanntmachung des Hinweises auf die Patenterteilung: **18.03.2015**
(21) Anmeldenummer: 11175574.0
(22) Anmeldetag: 27.07.2011
(51) Int. Cl.: B23K 26/20, B23K 26/04

(54) **Verfahren zur Steuerung einer Vorrichtung zum Schweißen mittels eines Lasers**
Method of controlling a device for laser welding
Procédé de contrôle d'un dispositif de soudure par laser

(30) Priorität: 12.08.2010 DE 102010034189; 26.10.2010 DE 102010060162
(43) Veröffentlichungstag der Anmeldung: 15.02.2012
(73) Patentinhaber: Scansonic MI GmbH, 13086 Berlin (DE)
(72) Erfinder: Sievi, Pravin, 10317 Berlin (DE)
(74) Vertreter: Kaufmann, Sigfrid

(56) Entgegenhaltungen:
- DE-A1-102006 004 919
- DE-A1-102009 003 355
- DE-A1-102009 057 209
- JP-B- 8 011 300

## Beschreibung

Die Erfindung betrifft ein Verfahren zur Steuerung einer Vorrichtung zum Schweißen mittels eines von einem Lager emitterten Laserstrahles gemäß dem Oberbegriff des Anspruchs 1 (siehe, z.B., DE 10 2009 003 355 A1), mit dem die Genauigkeit der Führung des Bearbeitungslasers von Fügevorrichtungen, die mittels einer Scanner-Optik gesteuert werden, insbesondere wenn im Verlauf der zu fügenden Naht große Änderungen der Höhe relativ zur Scanner-Optik auftreten, nachhaltig verbessert wird.

Aus dem Stand der Technik sind bereits Fügevorrichtungen bekannt, mit denen in Standardanwendungen bei der Führung des Bearbeitungslasers hohe Genauigkeiten erreicht werden.

So werden in DE 10 2009 057 209 A1 und DE 10 2009 003 355 A1 Vorrichtungen zur Materialbearbeitung mittels Laser mit einer durch eine Führungsmaschine relativ zum zu bearbeitenden Werkstück beweglichen Scanner-Optik, die nach dem Prinzip des pre-objektive-scanning oder des post-objective-scanning arbeitet und deren Strahlengang mittels einer oder mehrerer aktiver und/oder passiver Ablenkungseinheiten geführt ist, offenbart. Die Vorrichtung verfügt über einen mit der Scanner-Optik bewegten Projektor, der dazu dient, Messlicht in Form von Messstrukturen auf das zu bearbeitende Werkstück zu projizieren, und einen mit der Scanner-Optik bewegten Bildsensor, der sensitiv im Wellenlängenbereich des vom Projektor abgestrahlten Messlichts ist. Der Projektor ist außerhalb des Strahlengangs der Scanner-Optik angeordnet und das von ihm ausgestrahlte Messlicht besteht aus mindestens einer Linie, die quer zur Längsrichtung der auf dem Werkstück zu erzeugenden Naht verläuft und sich bevorzugt über das gesamte Arbeitsfeld der Scanner-Optik erstreckt. Mit Hilfe des Projektors kann in Nahtlängsrichtung mittels des sog. Vorgabewertes ein bestimmter Vorlauf zur Auftreffposition des Laserstrahls festgelegt werden.

Die DE 10 2006 004 919 A1 beschreibt einen Laserstrahlschweißkopf mit einem Schweißstrahl und Mitteln zur optischen Erfassung der Position einer Schweißnaht an einer vorlaufenden Messposition, wobei ein basierend auf einer Abweichung der Schweißnaht von einer Sollposition erzeugtes Korrektursignal unmittelbar und ohne Vorlaufberechnung zur Korrektur der Position des Schweißstrahls verwendbar ist.

Die EP 2 062 674 A1 beschreibt ein Verfahren zum Vorbereiten eines Laserschweißprozesses, wobei mit einer Sensoreinrichtung die Position einer Fügestelle an einem Werkstück in einem ersten Messbereich vorlaufend zu einer Laserstrahlposition, in einem zweiten Messbereich an der Laserstrahlposition und/oder in einem dritten Messbereich nachlaufend zu der Laserstrahlposition, und die Laserstrahlposition in dem zweiten Messbereich erfasst werden, und wobei die Positionen der Fügestelle in den jeweiligen Messbereichen und die Laserstrahlposition zum Anpassen der Lage, der Ausrichtung und/oder des Koordinatensystems der Sensoreinrichtung und/oder eines Laserbearbeitungskopfs relativ zum Werkstück miteinander verglichen werden.

In JP 8 011300 B wird zur Erhöhung der Effektivität von Schweißmaschinen vorgeschlagen, den Schweißbereich in größerer Entfernung auszumessen, indem ein Sensor zum Erkennen des Schweißbereichs von der Schweißstelle weg in weiter (von der Schweißstelle) entfernte Bereiche bewegt wird.

Bei der Bearbeitung von Werkstücken mit flacher Topologie, d.h. Werkstücken, bei denen im Nahtverlauf keine großen Änderungen der Höhe (des Abstands zwischen Werkstück und Scanner-Optik), wie z.B. steile Flanken oder Stufen, auftreten, wird mit der Vorrichtung sicher erreicht, dass die realen Vorläufe den Vorgabewerten der Vorläufe weitgehend entsprechen und infolgedessen die mindestens eine Linie des Messlichts in Nahtlängsrichtung immer einen definierten Abstand zur Auftreffposition des Laserstrahls einhält.

Die Vorrichtungen nach DE 10 2009 057 209 A1 und JP 8 011300 B sowie auch andere zurzeit verwendeten Lösungen gehen bei ihren Berechnungen davon aus, dass der reale Arbeitsvorlauf (Vorlauf, bei dem die zum Betrieb der Vorrichtung erforderlichen Messungen vorgenommen werden) zwischen dem Laserprozess und der auf das Bauteil projizierten mindestens einen Messlinie immer dem Sollwert des Arbeitsvorlaufs entspricht. Aus den Messungen werden Korrekturwerte ermittelt. Zu einem berechneten Zeitpunkt, an dem sich der Laserstrahl am entsprechenden Messort befinden müsste, werden dann die den Korrekturwerten entsprechenden Korrekturen durchgeführt.

Um günstige Triangulationswinkel zu erhalten, muss die optische Achse des Projektors gegenüber der optischen Achse des Bearbeitungslaserstrahls gekippt angeordnet sein. Bei einer solchen gekippten Anordnung führen jedoch Höhenänderungen (Erhebungen oder Senken) auf dem Werkstück aus Geometriegründen zu einer Verschiebung des realen Vorlaufs und damit zu Abweichungen zwischen dem Vorgabewert des Vorlaufs und dem sich real einstellenden Vorlauf .

Diese Abweichung des realen Vorlaufs vom Vorgabewert bringt zwei Nachteile mit sich.

Da erstens in den bekannten Vorrichtungen bei den Berechnungen der Korrekturwerte davon ausgegangen wird, dass der reale Arbeitsvorlauf mit dem Sollwert des Arbeitsvorlaufs (der "gewollte" Arbeitsvorlauf) übereinstimmt, werden bei Höhenänderungen im Nachverlauf die Korrekturen zur falschen Zeit (und infolgedessen auch am falschen Ort) durchgeführt.

Zweitens führt die Abweichung des realen Vorlaufs vom Sollwert zu einem Arbeitsvorlauf, der nicht optimal ist. Da das Bildsignal aufgrund der durch den Schweißprozess verursachten Umwelteinflüsse (wie z.B. Schweißdampf) umso schlechter wird, je kleiner der Vorlauf gewählt wird (Verringerung der Nachführstabilität), anderseits jedoch die Genauigkeit der Regelung mit zunehmendem Vorlauf abnimmt, muss bei Scanner-Optiken der Sollwert des Arbeitsvorlaufs immer so gewählt werden, dass ein Optimum von Nachführstabilität und Genauigkeit erreicht wird.

Aufgabe der Erfindung ist es, ein Verfahren zu finden, mit dem die Genauigkeit der Führung des Bearbeitungslasers in Fügevorrichtungen, die mittels einer Scanner-Optik gesteuert werden, auch bei längs zur zu erzeugenden Naht auftretenden Höhenschwankungen zwischen Scanner-Optik und Bauteil nachhaltig verbessert wird.

Diese Aufgabe wird erfindungsgemäß durch die Merkmale des Anspruchs 1 gelöst; vorteilhafte Ausgestaltungen der Erfindung ergeben sich aus den Ansprüchen 2 bis 8.

Das erfindungsgemäße Verfahren wird zur Steuerung einer Fügevorrichtung mit einem Bearbeitungslaser verwendet, deren Scanner-Optik mit mindestens einem externen Projektor ausgestattet ist. Der Projektor dient dazu, Messlicht in Form von Messstrukturen auf das zu bearbeitende Werkstück zu projizieren. Das Messlicht wird von einem mit der Scanner-Optik bewegten und im Wellenlängenbereich des Messlichts sensitiven Bildsensor erfasst. Die Scanner-Optik arbeitet nach dem Prinzip des pre-objektive-scanning oder des post-objective-scanning und wird mittels einer Führungsmaschine relativ zum zu bearbeitenden Werkstück bewegt. Der Strahlengang der Scanner-Optik ist mittels einer oder mehrerer aktiver und/oder passiver Ablenkungseinheiten geführt.

Voraussetzung für die Anwendung des Verfahrens ist, dass der Projektor außerhalb des Strahlengangs der Scanner-Optik angeordnet und seine optische Achse gegenüber der optischen Achse des Lasers um 5° bis 60°, bevorzugt 10° bis 25°, gekippt ist. Das vom Projektor ausgestrahlte Messlicht besteht aus mindestens einer Linie, die quer zur Längsrichtung der zu erzeugenden Naht verläuft.

Nach Maßgabe der Erfindung wird während der Erzeugung der Schweißnaht der Vorgabewert des Vorlaufs des Messlichts gegenüber der Auftreffposition des Laserstrahls in Nahtlängsrichtung gezielt verändert. Alle bekannten Verfahren arbeiten mit einem festen Vorgabewert des Vorlaufs, der reale Vorlauf kann allerdings auch bei diesen Verfahren, wie oben bereits diskutiert, aus Geometriegründen variieren.

Um den Vorlauf des Messlichts zur Auftreffposition des Laserstrahls (im Rahmen der apparativen Möglichkeiten) frei vorgeben zu können, wird ein Projektor eingesetzt, dessen Messlicht, z.B. durch Verändern seines Kippwinkels oder translatorisches Bewegen des gesamten Projektors oder mittels einer im ausgehenden Strahlengang des Projektors angeordneten, aktiven Umlenkungseinheit, unabhängig von der Führungsmaschine bewegt werden kann. Schließlich kann der Vorgabewert des Vorlaufs auch mittels der Scanner-Optik verändert werden.

Um den realen Arbeitsvorlauf auch bei Höhenschwankungen zwischen Scanner-Optik und Bauteil längs der zu erzeugenden Naht konstant zu halten, werden während der Erzeugung der Schweißnaht mit dem Bildsensor Bildsignale vom Messlicht aufgenommen.

Dabei wird der Vorgabewert des Vorlaufs entweder vorerst fest auf dem Vorgabewert des Arbeitsvorlaufs gehalten oder der Vorgabewert des Vorlaufs wird zyklisch variiert. Im Falle des festen Vorgabewerts (des Vorlaufs) werden mit dem Bildsensor Bildsignale während der Erzeugung der Naht aufgenommen. Bei einem zyklisch variierten Vorgabewert werden die Bildsignale hingegen während jeder Variation, die üblicherweise mit dem Vorgabewert des Arbeitsvorlaufs beginnt und sich zu größeren Vorgabewerten (weiter vom Auftreffpunkt des Laserstrahls entfernte) hin erstreckt, aufgenommen.

Die zyklischen Variationen der Vorgabewerte des Vorlaufs können ausschließlich innerhalb des Bildbereichs des Bildsensors erfolgen, oder es wird der Bildbereich des Bildsensors, um noch größere Vorgabewerte des Vorlaufs (als die im Bildbereich des Bildsensors liegenden) zu erreichen, während der Variation der Vorgabewerte des Vorlaufs dem Messlicht mittels der Scanner-Optik nachgeführt. Bei der Nachführung des Bildsensors wird zwar, da der Arbeitslaser und der Bildsensor dieselbe Optik nutzen, auch der Arbeitslaser mitbewegt, die Variation der Vorgabewerte erfolgt jedoch in Grenzen (Geschwindigkeit, Amplitude), die vom Schweißprozess ohne Weiteres toleriert werden.

Aus den so gewonnenen Bildsignalen wird mittels eines Triangulationsverfahrens, vorzugsweise dem Lichtschnittverfahren, die Topologie des Werkstücks in der Umgebung der zu erzeugenden Naht ermittelt. Mit Hilfe der Topologiedaten (Höhenwerte) werden dann die Vorgabewerte für den Arbeitsvorlauf derart angepasst, dass über den gesamten Verlauf der zu erzeugenden Naht jeweils die durch Höhenschwankungen verursachten Abweichungen des realen Arbeitsvorlaufs vom Sollwert des Arbeitsvorlaufs kompensiert werden. Auf diese Weise kann der reale Arbeitsvorlauf auf seinem optimalen Wert gehalten werden und die von der Scanner-Optik ermittelten Korrekturwerte kommen an den dafür vorgesehenen Positionen zum Einsatz.

Bei der Variante mit festen Vorgabewerten des Vorlaufs kann dabei lediglich auf die Topologiedaten vor und genau am Ort des Messlichts zurückgegriffen werden, während bei der Variante mit zyklischer Variation der Vorgabewerte des Vorlaufs auch in Vorschau, d.h. mit den Topologiedaten vor dem Ort des Messlichts gearbeitet, und infolgedessen noch genauer geregelt werden kann. Die Variante mit zyklischer Variation-ist allerdings technologisch aufwendiger.

Das erfindungsgemäße Verfahren kann darüber hinaus auch dazu genutzt werden, den realen Arbeitsvorlauf nicht festzuhalten, sondern auf einen so kleinen Wert einzustellen, dass die Qualität der Bildsignale gerade noch so gut ist, dass sie zur Regelung genutzt werden können. Auf diese Weise wird es möglich, sich im Schweißprozess stets an das Optimum von Nachführstabilität und Genauigkeit der Regelung heranzutasten.

Hierzu wird während der Erzeugung der Naht mit dem Bildsensor eine Anzahl von Einzelbildern pro Zeiteinheit aufgenommen, die größer ist (mindestens doppelt, üblicherweise fünfmal so groß) als die Anzahl der Einzelbilder, die zur Nahtführung erforderlich sind. Für jedes Einzelbild wird das Signal-/Rauschverhältnis bestimmt. Wenn das Signal-/Rauschverhältnis einen zuvor festgelegten Wert überschreitet, wird das Bild als gut (Gutbild) eingestuft, sobald dieser Wert unterschritten wird, wird das Bild als schlecht (Schlechtbild) gewertet. Aus den pro Zeiteinheit aufgenommen Einzelbildern wird der Fehlerquotient (Verhältnis von Schlechtbildem zu Gutbildern) ermittelt. Schließlich wird der Vorgabewert (um einen kleinen Wert, z.B. 0,1 bis 5 mm) des Vorlaufs erhöht, wenn der Fehlerquotient der Einzelbilder einen bestimmten Wert überschreitet und verringert (ebenfalls um einen kleinen Wert), sobald der Fehlerquotient einen bestimmten Wert unterschreitet. Das Aufnehmen der Einzelbilder und die anschließende Veränderung des Vorgabewerts des Vorlaufs erfolgt während des gesamten Schweißvorgangs.

Es ist auch möglich, diese Methode (Herantasten an den optimalen Arbeitsvorlauf) mit der Methode zur Kompensation der Verschiebung des realen Arbeitsvorlaufs aufgrund von Höhenänderungen zu kombinieren, indem in einem ersten, groben Regelschritt Höhenänderungen kompensiert und in einem zweiten, feinen Regelschritt der Arbeitsvorlauf anhand des Bildsignals weiter angepasst wird.

Des Weiteren ist das erfindungsgemäße Verfahren gut zur Kombination mit dem bereits bekannten, so genannten "on-the-Fly-Verfahren" geeignet, bei dem die Arbeitsgeschwindigkeit des Lasers temporär dadurch erhöht wird, dass zur Bewegung des Lasers durch die Führungsmaschine eine Bewegung des Lasers durch die Scanneroptik hinzugefügt wird.

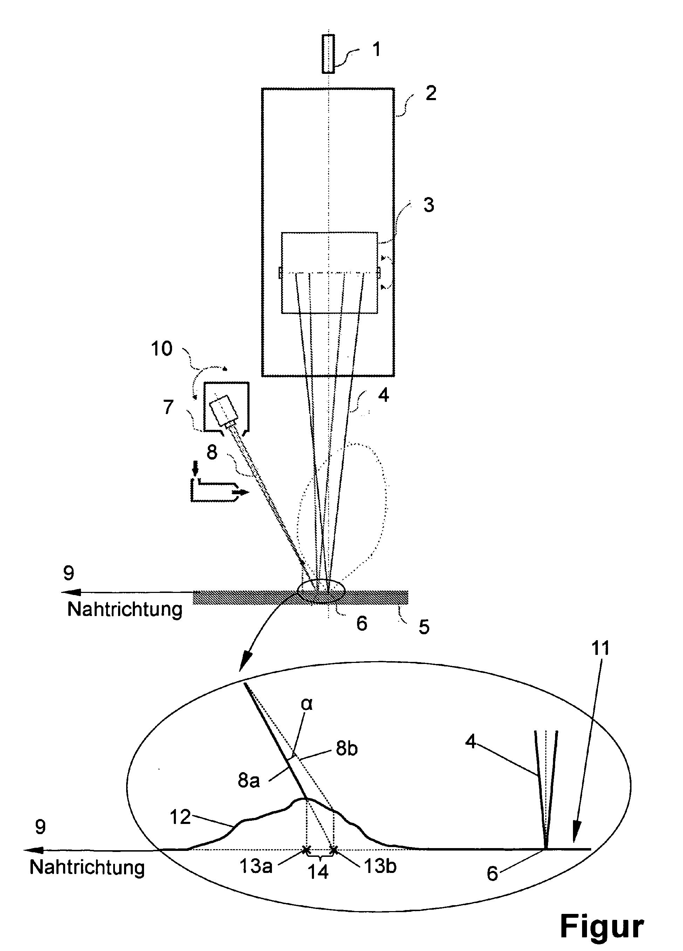

Die Wirkungsweise des erfindungsgemäßen Verfahrens, eingesetzt zur Kompensation von Höhenänderungen, wird nachfolgend anhand der Figur, die eine Fügevorrichtung in seitlicher Ansicht zeigt, näher erläutert.

Beim Auftreffen des vom Projektor 7 ausgesandten Messlichts 8, das hier aus einer Linie besteht, auf ein Werkstück 11, das nicht eben ist, sondern Erhebungen 12 oder Senken aufweist, würde die unkorrigierte Messlinie 8a bei einer Position 13a auf das Werkstück auftreffen. Bei der Berechnung der Korrekturen der Scanner-Optik würde jedoch von der Soll-Position 13b ausgegangen. Zwischen dem realen Arbeitsvorlauf (entsprechend Position 13a) und dem Sollwert des Arbeitsvorlaufs (entsprechend Position 13b) träte damit eine Abweichung 14 auf.

Mit Hilfe des Projektors 7, der über einen Freiheitsgrad 10 in Nahtlängsrichtung 9 verfügt, wird ständig eine zyklische Variation des Soll-Vorlaufs in Nahtlängsrichtung 9 durchgeführt und aus den dabei gewonnenen Bilddaten mit Hilfe des Lichtschnittverfahrens die Topologie des Werkstücks ermittelt. Die Abweichung 14 kann mittels der Topologiedaten dadurch kompensiert werden, dass die ursprüngliche (keine Kompensation des durch die Höhenänderung verursachten Fehlers) Messlinie 8a derart um einen Korrekturwinkel α gekippt wird (Kippen des Projektors 7 oder einer aktiven Ablenkungseinheit 3), dass der ursprüngliche, geometrisch verschobene Arbeitsvorlauf 13a auf den dem Sollwert entsprechenden Arbeitsvorlauf 13b geschwenkt wird (Messlinie 8b).

So wird sichergestellt, dass einerseits der Arbeitsvorlauf zur Auftreffposition 6 des Bearbeitungslasers 1 bezüglich Nachführstabilität und Genauigkeit einem Optimum entspricht und andererseits die von der Scanner-Optik ermittelten Korrekturwerte an der vorgesehenen Position angewandt werden.

### Liste der verwendeten Bezugszeichen

- 1: Bearbeitungslaser
- 2: Scanner-Optik
- 3: Ablenkungseinheit
- 4: Laserbearbeitungsstrahl
- 5: Werkstück
- 6: Auftreffposition
- 7: Projektor
- 8: Messlicht/Messlinie
- 8a: ursprüngliche Messlinie
- 8b: korrigierte Messlinie
- 9: Nahtlängsrichtung
- 10: Projektor-Freiheitsgrade in Nahtlängsrichtung
- 11: Werkstückoberfläche
- 12: Erhebung
- 13a: realer Arbeitsvorlaufs
- 13b: Sollwert des Arbeitsvorlaufs
- 14: Abweichung des Arbeitsvorlaufs
- α: Korrekturvvinkel

## Patentansprüche

1. Verfahren zur Steuerung einer Vorrichtung zum Schweißen mittels eines von einem Laser (1) emittierten Laserstrahls (4), wobei die Vorrichtung eine durch eine Führungsmaschine relativ zu einem zu bearbeitenden Werkstück (5) bewegte Scanner-Optik (2), die nach dem Prinzip des pre-objektive-scanning oder des post-objective-scanning arbeitet und deren Strahlengang mittels einer oder mehrerer aktiver und/oder passiver Ablenkungseinheiten (3) geführt ist, einen mit der Scanner-Optik (2) mitbewegten Projektor (7), der dazu dient, Messlicht (8) in Form von Messstrukturen auf das zu bearbeitende Werkstück (5) zu projizieren, und einen mit der Scanner-Optik (2) mitbewegten Bildsensor, der sensitiv im Wellenlängenbereich des vom Projektor (7) abgestrahlten Messlichts (8) ist, umfasst, wobei der Projektor (7) außerhalb des Strahlengangs der Scanner-Optik (2) angeordnet und seine optische Achse gegenüber der optischen Achse des Lasers (1) gekippt ist, und das vom Projektor (7) ausgestrahlte Messlicht (8) aus mindestens einer Linie besteht, die quer zu einer Längsrichtung (9) einer auf dem zu bearbeitenden Werkstück (5) zu erzeugenden Schweißnaht verläuft, **dadurch gekennzeichnet, dass** während der Erzeugung der Schweißnaht ein Vorgabewert eines Vorlaufs des Messlichts (8) in Nahtlängsrichtung bezüglich einer Auftreffposition (6) des Lagerstrahles (4) verändert wird, und : um den realen Arbeitsvorlauf (13a) auch bei Höhenschwankungen zwischen Scanner-Optik (2) und Bauteil (5) längs der zu erzeugenden Schweißnaht konstant zu halten,
- während der Erzeugung der Schweißnaht mit dem Bildsensor Signale vom Messlicht (8) aufgenommen werden,
- aus den Bildsignalen mittels eines Triangulationsverfahrens die Topologie des zu bearbeitenden Werkstücks (5) in der Umgebung der zu erzeugenden Schweißnaht ermittelt wird
- und mithilfe der ermittelten Topologiedaten die Vorgabewerte für den Arbeitsvorlauf derart angepasst werden, dass im Verlauf der Schweißnaht die durch Höhenschwankungen verursachten Abweichungen (14) des realen Arbeitsvorlaufs (13a) vom Sollwert des Arbeitsvorlaufs (13b) kompensiert werden;
oder, um einen realen Arbeitsvorlauf einzuregeln, bei dem die Qualität der Bildsignale gerade noch zur Regelung ausreicht, während der Erzeugung der Schweißnaht wiederholt die Schritte
- Aufnehmen einer Anzahl von Einzelbildern pro Zeiteinheit mit dem Bildsensor, wobei die Anzahl der Einzelbilder mindestens doppelt so groß ist, wie die Anzahl, die zur Nahtführung erforderlich ist,
- Ermitteln des Signal-/Rauschverhältnisses jedes Einzelbilds,
- Einteilung der Einzelbilder in Gutbilder, wenn das Signal-/Rauschverhältnis einen festgelegten Wert überschreitet, und in Schlechtbilder, sofern der festgelegte Wert unterschritten wird,
- Ermitteln eines Fehlerquotienten aus Schlechtbildern und Gutbildern,
- Erhöhung des Vorgabewerts des Vorlaufs, wenn der Fehlerquotient der Einzelbilder einen bestimmten Wert überschreitet und Verringerung des Vorgabewerts des Vorlaufs, sobald der Fehlerquotient einen bestimmten Wert unterschreitet,
ausgeführt werden.

2. Verfahren nach Anspruch 1, **dadurch gekennzeichnet, dass** zur Änderung des Vorgabewerts des Vorlaufs ein Kippwinkel des Projektors (7) verändert wird.

3. Verfahren nach Anspruch 1, **dadurch gekennzeichnet, dass** der Vorgabewert des Vorlaufs mittels der Scanner-Optik (2) verändert wird.

4. Verfahren nach einem der Ansprüche 1 bis 3, **dadurch gekennzeichnet, dass** als Triangulationsverfahren ein Lichtschnittverfahren eingesetzt wird.

5. Verfahren nach einem der Ansprüche 1 bis 4, **dadurch gekennzeichnet, dass** der Vorgabewert des Vorlaufs mittels des Projektors (7), beginnend mit dem Vorgabewert des Arbeitsvorlaufs zyklisch hin zu größeren Vorgabewerten variiert wird und die Bildsignale während jeder dieser Variationen vom Bildsensor aufgenommen werden.

6. Verfahren nach Anspruch 5, **dadurch gekennzeichnet, dass** die Variation der Vorgabewerte des Vorlaufs ausschließlich innerhalb des Bildbereichs des Bildsensors erfolgt.

7. Verfahren nach Anspruch 5, **dadurch gekennzeichnet, dass**, um größere Vorgabewerte des Vorlaufs als die im Bildbereich des Bildsensors liegenden Vorgabewerte zu ermöglichen, während der Variation der Vorgabewerte des Vorlaufs der Bildbereich des Bildsensors mittels der Scanner-Optik (2) dem Messlicht (8) nachgeführt wird.

8. Verfahren nach einem der Ansprüche 1 bis 7, **dadurch gekennzeichnet, dass** eine Arbeitsgeschwindigkeit des Laserstrahls (4) temporär dadurch erhöht wird, dass zur Bewegung des Laserstrahls (4) durch die Führungsmaschine -eine Bewegung des Laserstrahls (4) durch die Scanner-Optik (2) hinzugefügt wird.

## Claims

1. A method for controlling a device for welding using a laser beam (4) emitted by a laser (1), wherein the device comprises a scanner optical unit (2), which is moved by a guiding machine relative to a workpiece (5) to be processed and which operates according to the principle of pre-objective-scanning or post-objective-scanning, and the beam path of which is guided by means of one or more active and/or passive deflection units (3), a projector (7) which is moved with the scanner optical unit (2) and is used to project measuring light (8) in the form of measuring structures onto the workpiece (5) to be processed, and an image sensor, which is moved with the scanner optical unit (2) and which is sensitive in the wavelength range of the measuring light (8) radiated from the projector (7), wherein the projector (7) is disposed outside of the beam path of the scanner optical unit (2) and the optical axis of which is tilted relative to the optical axis of the laser (1), and the measuring light (8) radiated from the projector (7) consists of at least one line, which extends transversely to a longitudinal direction (9) of a welding seam to be produced on the workpiece (5) to be processed, **characterized in that** a default value of a progression of the measuring light (8) in the longitudinal direction of the welding seam is changed with respect to an impact position (6) of the laser beam (4) during the production of the welding seam and, in order to hold the real working progression (13a) constant along the welding seam to be produced even when there are height variations between the scanner optical unit (2) and the component (5),
- signals from the measuring light (8) are recorded by the image sensor during the production of the welding seam,
- the topology of the workpiece (5) to be processed is determined, in the vicinity of the welding seam to be produced, from the image signals by means of a triangulation process, and
- the default values for the working progression are adjusted on the basis of the topology data that are determined such that the deviations (14) of the real working progression (13a) from the setpoint value of the working progression (13b) caused by height variations are compensated for in the progression of the welding seam;
or, in order to adjust a real working progression, in which the quality of the image signals just suffices for the adjustment, steps are repeatedly carried out during the production of the welding seam, namely the steps of
- recording a number of individual images per unit of time using the image sensor, wherein the number of individual images is at least twice as great as the number that is required for seam tracking,
- determining the signal-to-noise ratio of each individual image,
- classifying the individual images into good images when the signal-to-noise ratio exceeds a defined value, and into bad images if the defined value is fallen below,
- determining an error quotient of bad images and good images,
- increasing the default value of the progression when the error quotient of the individual images exceeds a certain value and reducing the default value of the progression as soon as the error quotient falls below a certain value.

2. The method according to claim 1, **characterized in that** a tilt angle of the projector (7) is changed in order to change the default value of the progression.

3. The method according to claim 1, **characterized in that** the default value of the progression is changed by means of the scanner optical unit (2).

4. The method according to any one of claims 1 to 3, **characterized in that** a lightsection procedure is used as the triangulation process.

5. The method according to any one of claims 1 to 4, **characterized in that** the default value of the progression is cyclically varied toward larger default values by means of the projector (7) starting with the default value of the working progression, and the image signals are recorded by the image sensor during each of these variations.

6. The method according to claim 5, **characterized in that** the variation of the default values of the progression takes place exclusively within the image region of the image sensor.

7. The method according to claim 5, **characterized in that**, in order to permit larger default values of the progression than the default values located in the image region of the image sensor, the image region of the image sensor is guided behind the measuring light (8) by means of the scanner optical unit (2) during the variation of the default values of the progression.

8. The method according to any one of claims 1 to 7, **characterized in that** a working speed of the laser beam (4) is temporarily increased by the scanner optical unit (2) adding a movement of the laser beam (4) to the movement of the laser beam (4) by the guiding machine.

## Revendications

1. Procédé pour la commande d'un dispositif de soudage au moyen d'un faisceau laser (4) émis par un laser (1), dans lequel le dispositif comprend une optique de balayage (2) déplacée par une machine de guidage par rapport à une pièce usinée à traiter (5), laquelle travaille selon le principe du balayage pré-objectif ou du balayage post-objectif et dont le trajet optique est guidé au moyen d'une ou de plusieurs unités de déviation actives et/ou passives (3), un projecteur (7) déplacé ensemble avec l'optique de balayage (2), lequel sert à projeter de la lumière de mesure (8) sous la forme de structures de mesure sur la pièce usinée à traiter (5), et un capteur d'image déplacé ensemble avec l'optique de balayage (2), lequel est sensible dans la plage de longueur d'onde de la lumière de mesure (8) diffusée par le projecteur (7), dans lequel le projecteur (7) est agencé à l'extérieur du trajet optique de l'optique de balayage (2) et l'axe optique de celui-ci est incliné par rapport à l'axe optique du laser (1), et la lumière de mesure (8) diffusée par le projecteur (7) est constituée d'au moins une ligne s'étendant perpendiculairement à une direction longitudinale (9) d'une soudure à réaliser sur la pièce usinée à traiter (5), **caractérisé en ce que** pendant la réalisation de la soudure, une valeur par défaut d'une évolution de la lumière de mesure (8) dans la direction longitudinale de la soudure est modifiée par rapport à une position d'incidence (6) du faisceau laser (4), et, pour maintenir constante l'évolution réelle du travail (13a) même lors d'une variation de hauteur entre l'optique de balayage (2) et la pièce (5) le long de la soudure à réaliser,
- des signaux de la lumière de mesure (8) sont reçus avec le capteur d'image pendant la réalisation de la soudure,
- la topologie de la pièce usinée à traiter (5) dans l'environnement de la soudure à réaliser est déterminée à partir des signaux d'image, à l'aide d'un procédé de triangulation,
- et les valeurs de consigne pour le déroulement du travail sont adaptées à l'aide des données topologiques, de manière à compenser, dans l'évolution de la soudure, les écarts (14) de l'évolution réelle du travail (13a) par rapport à la valeur de consigne de l'évolution du travail (13b), provoqués par les variations de hauteur ;
ou, pour régler une évolution réelle du travail, dans laquelle la qualité des signaux d'image suffit encore de justesse pour le réglage, les étapes suivantes sont exécutées de façon répétée pendant la réalisation de la soudure
- enregistrement d'un certain nombre d'images individuelles par unité temporelle à l'aide du capteur d'image, sachant que le nombre d'images individuelles est au moins deux fois supérieur au nombre nécessaire pour guider la soudure,
- détermination du rapport signal-bruit de chaque image individuelle,
- classification des images individuelles en bonnes images, lorsque le quotient d'erreur des images individuelles dépasse une certaine valeur, et en mauvaises images si la valeur fixée n'est pas atteinte,
- détermination d'un quotient d'erreur des mauvaises images et des bonnes images,
- augmentation de la valeur par défaut de l'évolution, lorsque le quotient d'erreur des images individuelles dépasse une certaine valeur, et diminution de la valeur par défaut de l'évolution dès lors que le quotient d'erreur est inférieur à une certaine valeur,

2. Procédé selon la revendication 1, **caractérisé en ce qu'**un angle d'inclinaison du projecteur (7) est modifié pour modifier la valeur par défaut de l'évolution.

3. Procédé selon la revendication 1, **caractérisé en ce que** la valeur par défaut de l'évolution est modifiée au moyen de l'optique de balayage (2).

4. Procédé selon l'une des revendications 1 à 3, **caractérisé en ce qu'**un procédé de section lumineuse est utilisé en tant que procédé de triangulation.

5. Procédé selon l'une des revendications 1 à 4, **caractérisé en ce que** la valeur par défaut de l'évolution est modifiée de façon cyclique vers des valeurs par défaut plus élevées au moyen du projecteur (7), en commençant par la valeur par défaut de l'évolution du travail, et les signaux d'image sont enregistrés par le capteur d'image pour chacune de ces variations.

6. Procédé selon la revendication 5, **caractérisé en ce que** la modification des valeurs par défaut de l'évolution est effectuée exclusivement à l'intérieur de la zone d'image du capteur d'image.

7. Procédé selon la revendication 5, **caractérisé en ce que** pour obtenir des valeurs par défaut de l'évolution plus élevées que les valeurs par défaut tombant dans la zone d'image du capteur d'image, la zone d'image du capteur d'image suit la lumière de mesure (8) grâce à l'optique de balayage (2) pendant la modification des valeurs par défaut de l'évolution.

8. Procédé selon l'une des revendications 1 à 7, **caractérisé en ce qu'**une vitesse de travail du faisceau laser (4) est augmentée temporairement, en associant un déplacement du faisceau laser (4) par l'optique de balayage (2) au déplacement du faisceau laser (4) par la machine de guidage.
